(19) Europäisches Patentamt / European Patent Office / Office européen des brevets

(11) **EP 3 030 449 B1**

(12) **FASCICULE DE BREVET EUROPEEN**

(45) Date de publication et mention
de la délivrance du brevet:
**30.08.2017 Bulletin 2017/35**

(21) Numéro de dépôt: **14748241.8**

(22) Date de dépôt: **04.07.2014**

(51) Int Cl.:
*B60L 3/10* (2006.01)   *B60L 7/18* (2006.01)
*B60L 7/26* (2006.01)   *B60L 15/20* (2006.01)
*B60W 30/18* (2012.01)   *B60W 10/184* (2012.01)
*B60W 10/08* (2006.01)   *B60T 8/1761* (2006.01)

(86) Numéro de dépôt international:
**PCT/FR2014/051732**

(87) Numéro de publication internationale:
**WO 2015/018994 (12.02.2015 Gazette 2015/06)**

(54) **CONTROLE DU FREINAGE REGENERATIF DANS UN VEHICULE ELECTRIQUE OU HYBRIDE**

REGELUNG DER REGENERATIVEN BREMSUNG IN EINEM ELEKTRO- ODER HYBRIDFAHRZEUG

CONTROL OF REGENERATIVE BRAKING IN AN ELECTRIC OR HYBRID VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.08.2013 FR 1357803**

(43) Date de publication de la demande:
**15.06.2016 Bulletin 2016/24**

(73) Titulaire: **Renault S.A.S.
92100 Boulogne-Billancourt (FR)**

(72) Inventeur: **AZZI, Hamid
F-78310 Maurepas (FR)**

(56) Documents cités:
**EP-A1- 2 543 536     JP-A- 2000 344 078
JP-A- 2009 278 840     US-A1- 2002 013 194
US-A1- 2006 055 240**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le contrôle du freinage régénératif dans un véhicule équipé d'un premier moyen de freinage, régénératif, et d'un deuxième moyen de freinage, distinct du premier moyen de freinage, par exemple un moyen de freinage hydraulique.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse, car, régénérative, elle permet de récupérer une partie de l'énergie cinétique du véhicule afin de recharger les batteries.

Dans le cas d'un freinage découplé, le véhicule peut par exemple comporter un module de répartition (« Torque Blending » en anglais) agencé pour répartir une commande de freinage globale, issue de la pédale de frein, entre un actionneur électrique et un actionneur hydraulique. On parle alors de consignes de freinage complémentaires.

Selon un autre exemple, et en particulier dans le cas d'un véhicule à freinage non découplé, un véhicule peut comprendre un module de gestion de freinage (« Torque Manager» en anglais) agencé pour générer une consigne de freinage électrique fonction de la consigne conducteur, par exemple proportionnelle à cette consigne conducteur. La consigne de freinage électrique est alors une consigne de freinage supplémentaire, venant s'ajouter au freinage hydraulique classique, obtenu directement de la pédale de frein.

La consigne de freinage régénérative, qu'elle soit complémentaire ou supplémentaire, est élaborée en fonction non seulement de la consigne conducteur, issue d'une pédale de frein, et également en fonction d'autres paramètres, dont un signal indicatif de la stabilité du véhicule.

En effet, le freinage électrique s'applique uniquement aux roues motrices, c'est-à-dire à la ou les roue(s) avant(s) dans le cas d'un véhicule à traction, ou à la ou les roue(s) arrière(s) dans le cas d'un véhicule en propulsion. Le potentiel de freinage régénératif est donc plus limité qu'un freinage appliqué sur l'ensemble des roues.

Ce freinage régénératif risque donc de provoquer des glissements plus importants sur les roues concernées, voire même de provoquer un blocage des roues lorsque les conditions d'adhérence sont relativement précaires, par exemple dans le cas d'une chaussée mouillée ou recouverte de glace ou de neige.

Il est connu de désactiver le freinage régénératif lorsqu'un système de sécurité actif, par exemple un système d'anti-blocage des roues, par exemple l'ABS (de l'allemand « AntiBlockerSystem ») et/ou un système d'anti-patinage des roues, comme par exemple un système ESC (de l'anglais « Electronic Stability Control »), détecte une situation à risque, par exemple lorsqu'un signal de drapeau élaboré par ce système de sécurité actif passe à 1.

Ces systèmes de sécurité actifs sont en communication avec un ou plusieurs capteurs aptes à fournir des informations sur l'état des roues.

Le brevet US 7,077,484, décrit un procédé de contrôle de freinage avec une prise en compte plus fine qu'une simple désactivation du freinage régénératif. On calcule une valeur de risque de blocage, en fonction d'une valeur d'un taux de glissement estimé. Le taux de glissement pour une roue est fonction de la vitesse au centre de la roue, laquelle peut être mesurée relativement précisément, et d'une valeur de vitesse de référence. Dans ce document, cette vitesse de référence et ce taux de glissement sont extraits d'une table pré-chargée. Le brevet US 2006/055240 décrit un procédé de contrôle du freinage régénératif avec prise en compte du glissement lié au freinage régénératif, utilisant le calcul d'une estimation de la vitesse que les roues arrières auraient si elles étaient sur la même trajectoire que les roues avant. Il existe un besoin pour un contrôle plus précis du freinage régénératif.

La vitesse de référence du véhicule peut en effet être distincte de la vitesse au centre de la roue, notamment du fait de la déformation du pneu et de la présence de micro glissements.

Dans le cas d'une roue libre, le glissement est nul, c'est-à-dire que la vitesse au centre et en périphérie de la roue sont égales.

On pourrait donc envisager, pour déterminer une valeur de vitesse de référence, d'équiper un véhicule d'une cinquième roue libre, et de mesurer la vitesse de rotation au centre de cette roue, ou bien encore d'utiliser des données issues d'un système navigation du type GPS (de l'anglais « Global Positionning System »).

Il existe néanmoins un besoin pour un contrôle du freinage régénératif permettant de concilier précision et simplicité.

Il est proposé un procédé de contrôle du freinage régénératif dans un véhicule selon la revendication 1. Dit autrement, plutôt que d'estimer une valeur de vitesse de référence globale du véhicule, laquelle permettrait d'estimer le glissement de chacune des roues, ce glissement étant susceptible d'être dû au freinage hydraulique et au freinage régénératif le cas échéant, on préfère estimer une valeur d'un paramètre représentatif de glissement partiel, c'est-à-dire ici lié au freinage régénératif, à partir d'une mesure de vitesse prise au niveau d'au moins une roue du véhicule qui ne subit pas le freinage régénératif.

Ainsi, on fait en quelques sortes l'hypothèse que le glissement, dans le cas d'une roue subissant à la fois un freinage régénératif et un freinage hydraulique, peut s'écrire comme la somme d'une valeur de glissement dû au freinage régénératif et d'une valeur de glissement dû au freinage hydraulique. En comparant les vitesses au centre d'une roue ne subissant pas le freinage régénératif à la vitesse au centre d'une roue subissant ce freinage régénératif, on peut ainsi évaluer le glissement dû au freinage régénératif, et donc piloter le freinage régénératif de façon à maintenir ce glissement dans une zone d'adhérence.

Cette valeur de consigne de freinage régénératif peut être transmise vers le moyen de freinage régénératif, afin d'être appliquée à la première roue ou à cette au moins une première roue.

Cette valeur de consigne de freinage régénératif peut être estimée à partir de valeurs de vitesse d'une seule première roue et d'une seule deuxième roue, ou bien de plusieurs premières roues et de plusieurs deuxièmes roues.

Avantageusement et de façon non limitative, le procédé peut comprendre une étape de comparaison de la valeur de paramètre représentatif du glissement lié au freinage régénératif à un seuil de glissement. Si cette valeur est supérieure ou égale à ce seuil, on peut commander une diminution de la valeur de consigne de freinage régénératif.

Avantageusement et de façon non limitative, ces étapes d'estimation d'une valeur de glissement de comparaison à un seuil et de commande peuvent être répétées régulièrement. Dit autrement, on met en place une boucle fermée pour asservir la consigne de freinage régénératif. On pourra asservir la valeur du paramètre représentatif du glissement lié au freinage régénératif, de sorte que cette valeur reste en-deçà du seuil.

Avantageusement et de façon non limitative, la valeur du paramètre représentatif du glissement lié au freinage régénératif pour une première roue, peut être estimée en fonction d'une valeur de vitesse de la deuxième roue située du même côté du véhicule que cette première roue.

Par exemple, pour un véhicule à propulsion à quatre roues, on estimera la valeur du freinage régénératif de la roue arrière droite en fonction de la vitesse au centre de roue arrière droite, et en fonction de la vitesse au centre de la roue avant droite.

On peut en effet supposer que les roues situées d'un même côté d'un véhicule sont en général amenées à être en contact avec des revêtements plus proches que les roues de part et d'autre du véhicule.

En outre, estimer le glissement dû au freinage régénératif pour une roue à partir d'une valeur de vitesse d'une autre roue située du même côté du véhicule, plutôt qu'à partir d'une valeur de vitesse moyenne des deux roues avants, dans le cas d'un véhicule à propulsion (ou d'une valeur de vitesse moyenne des deux roues arrières dans le cas d'un véhicule à traction), peut permettre un pilotage plus précis, notamment dans les situations dites de « μ-split » où un côté du véhicule subit davantage de glissement que l'autre côté.

Avantageusement et de façon non limitative, on peut prévoir de calculer une valeur de pseudo-vitesse de la deuxième roue $W_2$ à partir de la valeur de vitesse au centre de cette deuxième roue, selon :

$$w_2' = w_2 . (1 - \frac{1}{2}(\frac{\theta_v}{K})^2)$$

où $W_2$ et la valeur de vitesse au centre de la deuxième roue, $\theta_v$, est une valeur d'angle au volant issue d'un capteur d'angle volant, et où K est une valeur d'un facteur de démultiplication de la colonne de direction.

Ainsi, cette valeur de pseudo-vitesse est une estimation de la vitesse que la deuxième roue aurait si elle était sur la même trajectoire que la première roue.

Lorsque le véhicule est en ligne droite, la valeur de pseudo-vitesse est ainsi égale à la valeur de vitesse au centre.

Avantageusement et de façon non limitative, on peut prévoir d'appliquer la formule ci-dessus par défaut, et éventuellement de détecter les situations de ligne droite, et de choisir alors des valeurs de pseudo-vitesses directement égales à la valeur de vitesse au centre.

Alternativement, on peut prévoir de détecter les situations de virage, et d'appliquer la formule ci-dessus seulement en cas de détection d'une situation de virage.

La consigne de freinage régénérative peut par exemple être complémentaire d'une consigne de freinage non-régénérative appliquée par le deuxième moyen de freinage, supplémentaire par rapport au freinage appliqué par ce deuxième moyen de freinage, ou autre.

L'invention peut trouver une application sur tous les véhicules qui possèdent un actionneur de couple permettant de récupérer de l'énergie, c'est-à-dire notamment les véhicules électriques ou hybrides, et également les véhicules thermiques équipés avec un alternateur, par exemple un alterno-démarreur permettant un couple de freinage important.

Il est en outre proposé un produit programme d'ordinateur comprenant des instructions pour effectuer les étapes du procédé décrit ci-dessus, lorsque ces instructions sont exécutées par un processeur.

Ce programme d'ordinateur peut par exemple être stocké sur un support de type disque dur, être téléchargé ou autre.

Il est en outre proposé un dispositif de contrôle du freinage régénératif selon la revendication 6. Ainsi, ce dispositif peut permettre de mettre en oeuvre le procédé décrit ci-dessus. Ce dispositif peut par exemple comprendre ou être intégré dans un ou plusieurs processeurs, par exemple un microcontrôleur, un microprocesseur ou autre. Les moyens de réception peuvent par exemple comprendre un port d'entrée, une broche d'entrée, ou autre. Les premiers et les deuxièmes moyens de traitement peuvent être distincts ou non. Il peut par exemple s'agir de coeurs de processeur ou CPU (de l'anglais « Central Processing Unit »). Le dispositif peut comprendre en outre des moyens de transmission, par exemple un port de sortie, une broche de sortie, ou autre, pour envoyer la valeur de consigne de freinage régénératif vers le premier moyen de freinage.

Les valeurs de vitesse reçues peuvent être issues de capteurs respectifs.

Il est en outre proposé un véhicule, par exemple un véhicule automobile, par exemple électrique ou hybride, comprenant le dispositif de contrôle décrit ci-dessus.

L'invention sera mieux comprise en référence aux figures, lesquelles illustrent des modes de réalisation donnés à titre d'exemple et non limitatifs.

La figure 1 est une vue, de dessus et très schématique, d'un exemple de véhicule, selon un mode de réalisation de l'invention.
La figure 2 représente schématiquement un exemple de dispositif de contrôle selon un mode de réalisation de l'invention.
La figure 3 est un logigramme d'un exemple de procédé selon un mode de réalisation de l'invention.

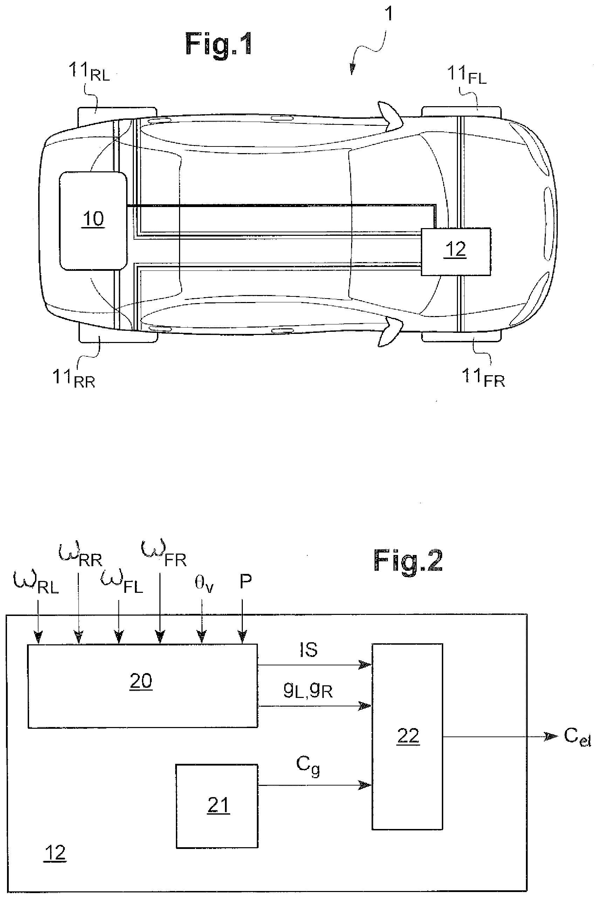

En référence à la figure 1, un véhicule 1 comprend un moteur thermique non représenté, et un moteur électrique 10 apte à entraîner les roues arrières $11_{RL}$, $11_{RR}$. Le véhicule comprend en outre des roues avants $11_{FL}$ et $11_{FR}$. Les roues avants et les roues arrières subissent toutes un freinage hydraulique. En revanche, le freinage électrique tel qu'appliqué via le moteur électrique 10 est subi seulement par les roues arrières $11_{RL}$, $11_{RR}$.

Un module ESC 12 reçoit des valeurs de mesure de capteurs de rotation d'arbres permettant de mesurer des vitesses aux centres des roues avants et des roues arrières. Ce module ESC est en communication, par exemple via un bus CAN (de l'anglais « Controller Area Network ») avec l'actionneur électrique 10.

La figure 2 montre de façon plus précise le fonctionnement de l'ESC 12.

L'ESC 12 comporte un module de stabilité 20 recevant des valeurs de rotation au centre des roues avants et arrières, ainsi qu'une valeur de pression de freinage P et une valeur d'angle volant $\theta_v$, issue d'un capteur d'angle volant du véhicule.

Ce module 20 permet de générer une valeur de drapeau IS et deux valeurs de paramètres représentatifs des glissements liés au freinage électrique des roues arrières gauche et droite respectivement $g_L$ et $g_R$.

Un module de calcul 21 de la consigne conducteur Cg permet, à partir de signaux non représentés et incluant notamment un signal de contacteur stop et un signal de pression maître-cylindre, de générer de valeur de consigne globale Cg correspondant à une estimation de la volonté de freinage du conducteur. Ce type de module de calcul est connu en soi et ne sera pas détaillé davantage.

Un module de gestion de freinage (« torque manager» en anglais) reçoit la valeur de drapeau IS, les valeurs de paramètre représentatifs des glissements liés au freinage électrique $g_L$ $g_R$, et la valeur de consigne de freinage globale Cg, et génère une consigne de freinage électrique $C_{el}$ en fonction notamment de ces valeurs reçues.

Par exemple lorsque le drapeau IS est à 1, le freinage électrique est désactivé c'est-à-dire que la consigne $C_{el}$ est nulle.

Lorsque les valeurs $g_L$, $g_R$ sont inférieures à un seuil, la valeur de consigne de freinage électrique $C_{el}$ est choisie proportionnelle à la valeur de consigne de freinage globale Cg par exemple égale à 10 ou 20% de cette valeur.

La valeur de consigne de freinage électrique supplémentaire $C_{el}$ est envoyée vers la machine électrique référencée 10 sur la figure 1.

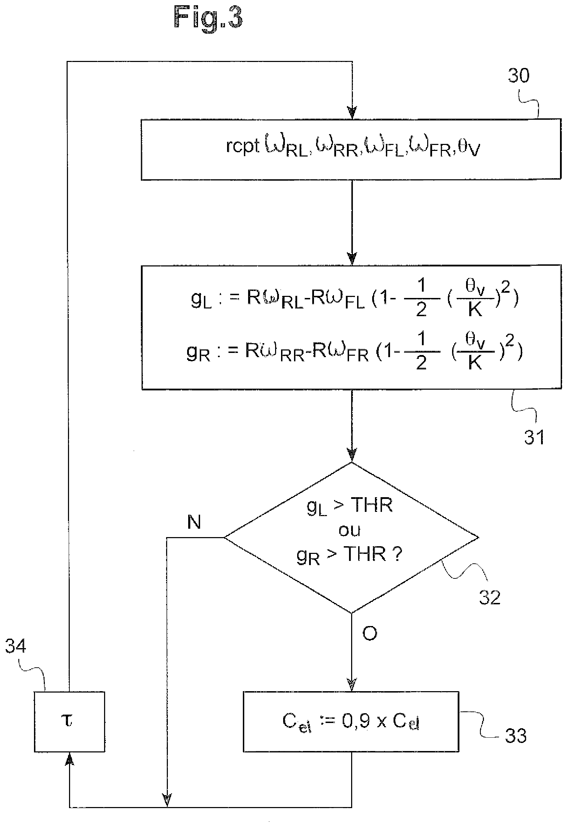

La figure 3 est un logigramme illustrant schématiquement un exemple de procédé mis en oeuvre par le module ESC.

Le procédé comporte une étape 30 de réception des valeurs de vitesses de rotation des roues et de la valeur d'angle volant.

Au cours d'une étape 31 on calcule des valeurs des paramètres $g_L$, $g_R$ de glissement liées au freinage régénératif pour les roues arrière gauche et droite respectivement, en appliquant les formules ci-dessous :

$$g_L = Rw_{RL} - Rw_{FL}\left(1 - \frac{1}{2}\left(\frac{\theta_v}{K}\right)^2\right),$$

et

$$g_R = Rw_{RR} - Rw_{FR}\left(1 - \frac{1}{2}\left(\frac{\theta_v}{K}\right)^2\right)$$

dans lesquelles

R est le rayon des roues supposées identiques d'une roue à l'autre,
$W_{RL}$ est la vitesse angulaire de rotation au centre de la roue arrière gauche,
$W_{FL}$ est la vitesse angulaire de rotation au centre de la roue avant gauche,
$W_{RR}$ est la vitesse angulaire de rotation au centre de la roue arrière droite,
$W_{FR}$ est la vitesse angulaire de rotation au centre de la roue avant droite,
$\theta_v$ est la valeur d'angle au volant reçue à l'étape 30, et
K est une valeur d'un facteur de démultiplication de la colonne de direction.

Puis au cours d'une étape de test 32, on compare ces valeurs $g_L$, $g_R$ à un seuil THR.

Dans cet exemple le test est positif si une des valeurs est supérieure au seuil THR.

Dans ce cas, la valeur de consigne de freinage électrique $C_{el}$ est diminuée, par exemple décrémentée de 10%, au cours d'une étape 33.

Puis, après une étape d'attente 34, ces différentes étapes 31, 32, 33 sont réitérées. Une telle boucle fermée permet ainsi d'asservir la valeur de consigne électrique de sorte que le glissement lié au freinage électrique reste en-deçà du seuil THR.

La boucle peut comprendre en outre une étape non représentée de transmission de la valeur de consigne de freinage électrique $C_{el}$ vers l'actionneur électrique, afin qu'une force de freinage correspondant à cette valeur de consigne soit appliquée aux roues arrières.

Ce seuil THR peut être choisi de sorte que le glissement reste dans une zone d'adhérence dans laquelle l'adhérence, c'est-à-dire le rapport entre la force de trainée et le poids, varie linéairement avec le glissement. Dit autrement, on maintient le véhicule dans cette zone d'adhérence.

Pour revenir à la figure 2, si cette régulation mise en oeuvre à partir des valeurs de glissement liées au freinage électrique $g_L$, $g_R$ s'avère insuffisante, le module d'indicateur de stabilité 20 élaborera un drapeau IS avec une valeur égale à 1, ce qui désactive le freinage régénératif.

Dans le mode de réalisation représenté, le véhicule est un véhicule à propulsion, c'est-à-dire que le freinage électrique s'applique aux roues arrière. Il va de soi que ce procédé pourrait être adapté dans le cas d'un véhicule à traction.

## Revendications

1. Procédé de contrôle du freinage régénératif pour un véhicule équipé d'un premier moyen de freinage, régénératif, et d'un deuxième moyen de freinage distinct du premier moyen de freinage, le véhicule comprenant au moins une première roue, et au moins une deuxième roue, le deuxième moyen de freinage s'appliquant à ladite au moins une première roue et à ladite au moins une deuxième roue, et le premier moyen de freinage s'appliquant à ladite au moins une première roue seulement, le procédé comprenant

recevoir (30) une valeur de vitesse de la première roue et une valeur de vitesse de la deuxième roue, estimer (31) une valeur d'un paramètre représentatif du glissement lié au freinage régénératif en fonction de la valeur de vitesse de la première roue, et en fonction de la valeur de vitesse de la deuxième roue, l'étape d'estimation (31) comprenant un calcul d'une valeur de pseudo-vitesse de la deuxième roue à partir de la valeur de vitesse au centre de cette deuxième roue, selon :

$$w'_2 = w_2 . (1 - \frac{1}{2}(\frac{\theta_v}{K})^2)$$

où $w_2$ et la valeur de vitesse au centre de la deuxième roue, $\theta_v$ est une valeur d'angle au volant issue d'un capteur d'angle volant, et où K est une valeur d'un facteur de démultiplication d'une colonne de direction, et

élaborer (32, 33) une valeur de consigne de freinage régénératif en fonction de la valeur estimée du paramètre représentatif de glissement lié au freinage régénératif.

2. Procédé selon la revendication 1, comprenant comparer (32) la valeur de paramètre représentatif du glissement lié au freinage régénératif à un seuil de glissement, et

si cette valeur est supérieure ou égale à ce seuil, commander (33) une diminution de la valeur de consigne de freinage régénératif.

3. Procédé selon la revendication 2, dans lequel on répète régulièrement les étapes de réception (30), d'estimation (31) de la valeur du paramètre représentatif du glissement lié au freinage régénératif, de comparaison (32) de ladite valeur au seuil de glissement, et de commande (33) de diminution de la valeur de consigne de freinage régénératif le cas échéant.

4. Procédé selon l'une quelconque des revendications 1 à 3, dans lequel la valeur du paramètre représentatif du glissement lié au freinage régénératif pour une première roue, est estimée en fonction d'une valeur de vitesse de la deuxième roue située du même côté du véhicule que cette première roue.

5. Produit programme d'ordinateur comprenant des instructions pour effectuer les étapes du procédé selon l'une quelconque des revendications 1 à 4, lorsque ces instructions sont exécutées par un processeur.

6. Dispositif de contrôle (12) du freinage régénératif pour un véhicule équipé d'un premier moyen de freinage, régénératif, et d'un deuxième moyen de freinage distinct du premier moyen de freinage, le véhicule comprenant au moins une première roue, et au moins une deuxième roue, le deuxième moyen de freinage s'appliquant à ladite au moins une première roue et à ladite au moins une deuxième roue, et le premier moyen de freinage s'appliquant à ladite au moins une première roue seulement, le dispositif de contrôle comprenant :

des moyens de réception pour recevoir une valeur de vitesse de la première roue et une valeur de vitesse de la deuxième roue, des premiers moyens de traitement (20) pour estimer une valeur d'un paramètre représentatif du glissement lié au freinage régénératif en fonction de la valeur de vitesse de la première roue, et en fonction de la valeur de vitesse de la deuxième roue, cette estimation étant effectuée en calculant une valeur de pseudo-vitesse de la deuxième roue à partir de la valeur de vitesse au centre de cette deuxième roue, selon :

$$w'_2 = w_2 . (1 - \frac{1}{2}(\frac{\theta_v}{K})^2)$$

où $w_2$ et la valeur de vitesse au centre de la deuxième roue, $\theta_v$ est une valeur d'angle au volant issue d'un capteur d'angle volant, et où K est une valeur d'un facteur de démultiplication d'une colonne de direction, et
des deuxièmes moyens de traitement (22) pour élaborer une valeur de consigne de freinage régénératif en fonction de la valeur estimée du paramètre représentatif de glissement lié au freinage régénératif.

**7.** Véhicule automobile (1) équipé d'un premier moyen de freinage (10), régénératif, et d'un deuxième moyen de freinage distinct du premier moyen de freinage, le véhicule comprenant au moins une première roue ($11_{RL}$, $11_{RR}$), et au moins une deuxième roue ($11_{FL}$, $11_{FR}$), le deuxième moyen de freinage s'appliquant à ladite au moins une première roue et à ladite au moins une deuxième roue, et le premier moyen de freinage s'appliquant à ladite au moins une première roue seulement, et comprenant le dispositif de contrôle (12) selon la revendication 6.

**8.** Véhicule automobile (1) selon la revendication 7, comprenant un actionneur électrique (10).

**9.** Véhicule automobile (1) selon l'une des revendications 7 ou 8, dans lequel les premières roues sont les roues arrière ($11_{RL}$, $11_{RR}$)·

**Patentansprüche**

**1.** Verfahren zur Regelung der regenerativen Bremsung für ein Fahrzeug, das mit einem ersten regenerativen Bremsmittel und einem zweiten, vom ersten Bremsmittel verschiedenen Bremsmittel ausgestattet ist, wobei das Fahrzeug mindestens ein erstes Rad und mindestens ein zweites Rad umfasst, wobei das zweite Bremsmittel an dem mindestens einen ersten Rad und an dem mindestens einen zweiten Rad angewandt wird, und wobei das erste Bremsmittel nur an dem mindestens ersten Rad angewandt wird, wobei das Verfahren umfasst Empfangen (30) eines Geschwindigkeitswerts des ersten Rades und eines Geschwindigkeitswerts des zweiten Rades,
Schätzen (31) eines Werts eines Parameters, der für das Gleiten in Verbindung mit dem regenerativen Bremsen in Abhängigkeit vom Geschwindigkeitswert des ersten Rades und in Abhängigkeit vom Geschwindigkeitswert des zweiten Rades repräsentativ ist, wobei der Schritt des Schätzens (31) eine Berechnung eines Pseudo-Geschwindigkeitswerts des zweiten Rades auf Basis des Geschwindigkeitswerts in der Mitte dieses zweiten Rades umfasst, gemäß:

$$w'_2 = w_2 . (1 - \frac{1}{2}(\frac{\theta_v}{K})^2)$$

wobei $\omega_2$ der Geschwindigkeitswert in der Mitte des zweiten Rades ist, $\theta_v$ ein Winkelwert am Lenkrad ausgegeben von einem Lenkwinkelsensor ist, und wobei K ein Wert eines Übersetzungsfaktors einer Lenksäule ist, und
Ausarbeiten (32, 33) eines regenerativen Bremssollwerts in Abhängigkeit vom geschätzten Wert des Parameters, der für ein Gleiten in Verbindung mit dem regenerativen Bremsen repräsentativ ist.

**2.** Verfahren nach Anspruch 1, umfassend
Vergleichen (32) des Werts eines Parameters, der für das Gleiten in Verbindung mit dem regenerativen Bremsen repräsentativ ist, mit einer Gleitgrenze, und wenn dieser Wert größer oder gleich dieser Grenze ist, Steuern (33) einer Verringerung des regenerativen Bremssollwerts.

**3.** Verfahren nach Anspruch 2, bei dem regelmäßig die Schritte des Empfangens (30), des Schätzens (31) des Werts des für das Gleiten in Verbindung mit dem regenerativen Bremsen repräsentativen Parameters, des Vergleichens (32) des Werts mit der Gleitgrenze und gegebenenfalls des Steuerns (33) einer Verringerung des Bremssollwerts wiederholt werden.

**4.** Verfahren nach einem der Ansprüche 1 bis 3, bei dem der Wert des Parameters, der für das Gleiten in Verbindung mit dem regenerativen Bremsen für ein erstes Rad repräsentativ ist, in Abhängigkeit von einem Geschwindigkeitswert des zweiten Rades, das sich auf derselben Seite des Fahrzeugs wie dieses erste Rad befindet, geschätzt wird.

**5.** Computerprogrammprodukt, umfassend Anweisungen für die Ausführung der Schritte des Verfahrens nach einem der Ansprüche 1 bis 4, wenn diese Anweisungen von einem Prozessor ausgeführt werden.

**6.** Vorrichtung (12) zur Regelung der regenerativen Bremsung für ein Fahrzeug, das mit einem ersten regenerativen Bremsmittel und einem zweiten, vom ersten Bremsmittel verschiedenen Bremsmittel ausgestattet ist, wobei das Fahrzeug mindestens ein erstes Rad und mindestens ein zweites Rad umfasst, wobei das zweite Bremsmittel an dem mindestens einen ersten Rad und an dem mindestens einen zweiten Rad angewandt wird, und wobei das erste Bremsmittel nur an dem mindestens ersten Rad angewandt wird, wobei die Vorrichtung zur Regelung umfasst

Mittel zum Empfangen eines Geschwindigkeitswerts des ersten Rades und eines Geschwindigkeitswerts des zweiten Rades,

erste Bearbeitungsmittel (20) zum Schätzen eines Werts eines Parameters, der für das Gleiten in Verbindung mit dem regenerativen Bremsen in Abhängigkeit vom Geschwindigkeitswert des ersten Rades und in Abhängigkeit vom Geschwindigkeitswert des zweiten Rades repräsentativ ist, wobei dieses Schätzen durch Berechnung eines Pseudo-Geschwindigkeitswerts des zweiten Rades auf Basis des Geschwindigkeitswerts in der Mitte dieses zweiten Rades durchgeführt wird, gemäß:

$$ w_2' = w_2.(1 - \frac{1}{2}(\frac{\theta_v}{K})^2) $$

wobei $\omega_2$ der Geschwindigkeitswert in der Mitte des zweiten Rades ist, $\theta_v$ ein Winkelwert am Lenkrad ausgegeben von einem Lenkwinkelsensor ist, und wobei K ein Wert eines Übersetzungsfaktors einer Lenksäule ist, und

zweite Bearbeitungsmittel (22) zum Ausarbeiten eines regenerativen Bremssollwerts in Abhängigkeit vom geschätzten Wert des Parameters, der für ein Gleiten in Verbindung mit dem regenerativen Bremsen repräsentativ ist.

**7.** Kraftfahrzeug (1), das mit einem ersten regenerativen Bremsmittel (10) und einem zweiten Bremsmittel, das vom ersten Bremsmittel verschieden ist, ausgestattet ist, wobei das Fahrzeug mindestens ein erstes Rad ($11_{RL}$, $11_{RR}$) und mindestens ein zweites Rad ($11_{FL}$, $11_{FR}$) umfasst, wobei das zweite Bremsmittel an dem mindestens einen ersten Rad und an dem mindestens einen zweiten Rad angewandt wird, und wobei das erste Bremsmittel nur an dem mindestens einen ersten Rad angewandt wird, und umfassend die Regelungsvorrichtung (12) nach Anspruch 6.

**8.** Kraftfahrzeug (1) nach Anspruch 7, umfassend einen elektrischen Aktuator (10).

**9.** Kraftfahrzeug (1) nach einem der Ansprüche 7 oder 8, bei dem die ersten Räder die Hinterräder ($11_{RL}$, $11_{RR}$) sind.

**Claims**

**1.** Method for controlling regenerative braking for a vehicle equipped with a first, regenerative, braking means and with a second braking means separate from the first braking means, the vehicle comprising at least one first wheel and at least one second wheel, the second braking means being applied to said at least one first wheel and to said at least one second wheel, and the first braking means being applied to said at least one first wheel only, the method comprising reception (30) of a speed value of the first wheel and a speed value of the second wheel, estimation (31) of a value of a parameter representing the slip associated with the regenerative braking as a function of the speed value of the first wheel and as a function of the speed value of the second wheel, the estimation step (31) comprising a calculation of a pseudo-speed value of the second wheel on the basis of the speed value at the center of this second wheel according to:

$$ w_2' = w_2.(1 - \frac{1}{2}(\frac{\theta_v}{K})^2) $$

where $w_2$ is the speed value at the center of the second wheel, $\theta_v$ is a value of the angle at the steering wheel, coming from a steering wheel angle sensor, and where K is a value of a demultiplication factor of a steering column, and

formation (32, 33) of a regenerative braking setpoint value as a function of the estimated value of the parameter representing slip associated with the regenerative braking.

**2.** Method according to Claim 1, comprising comparison (32) of the parameter value representing the slip associated with the regenerative braking with a slip threshold, and

if this value is greater than or equal to this threshold, instigation (33) of a decrease of the regenerative braking setpoint value.

**3.** Method according to Claim 2, wherein the steps of reception (30), of estimation (31) of the value of the parameter representing the slip associated with the regenerative braking, of comparison (32) of said value with the slip threshold, and of instigation (33) of a decrease of the regenerative braking setpoint value are optionally repeated regularly.

**4.** Method according to any one of Claims 1 to 3, wherein the value of the parameter representing the slip associated with the regenerative braking for a first wheel is estimated as a function of a speed value of the second wheel lying on the same side of the vehicle as this first wheel.

**5.** Computer program product comprising instructions for carrying out the steps of the method according to any one of Claims 1 to 4 when these instructions are executed by a processor.

**6.** Device (12) for controlling regenerative braking for a vehicle equipped with a first, regenerative, braking means and with a second braking means separate from the first braking means, the vehicle comprising at least one first wheel and at least one second wheel, one first wheel and to said at least one second wheel, and the first braking means being applied to said at least one first wheel only, the control device comprising:

reception means (20) for receiving a speed value of the first wheel and a speed value of the second wheel, first processing means (20) for estimating a value of a parameter representing the slip associated with the regenerative braking as a function of the speed value of the first wheel and as a function of the speed value of the second wheel, this estimation being carried out by calculating a pseudo-speed value of the second wheel on the basis of the speed value at the center of this second wheel according to:

$$w'_2 = w_2.(1 - \frac{1}{2}(\frac{\theta_v}{K})^2)$$

where $w_2$ is the speed value at the center of the second wheel, $\theta_v$ is a value of the angle at the steering wheel, coming from a steering wheel angle sensor, and where K is a value of a demultiplication factor of a steering column, and second processing means (22) for forming a regenerative braking setpoint value as a function of the estimated value of the parameter representing slip associated with the regenerative braking.

**7.** Motor vehicle (1) equipped with a first, regenerative, braking means (10) and with a second braking means separate from the first braking means, the vehicle comprising at least one first wheel ($11_{RL}$, $11_{RR}$) and at least one second wheel ($11_{FL}$, $11_{FR}$), the second braking means being applied to said at least one first wheel and to said at least one second wheel, and the first braking means being applied to said at least one first wheel only, and comprising the control device (12) according to Claim 7.

**8.** Motor vehicle (1) according to Claim 7, comprising an electrical actuator (10).

**9.** Motor vehicle (1) according to one of Claims 7 and 8, wherein the first wheels are the rear wheels ($11_{RL}$, $11_{RR}$)

## Fig.1

1

$11_{RL}$

$11_{FL}$

10

12

$11_{RR}$

$11_{FR}$

## Fig.2

$\omega_{RL}$  $\omega_{RR}$  $\omega_{FL}$  $\omega_{FR}$  $\theta_V$  P

20

IS

$g_L, g_R$

22

$C_{el}$

21

$C_g$

12

## Fig.3

rcpt $(\omega_{RL}, \omega_{RR}, \omega_{FL}, \omega_{FR}, \theta_V$     30

$$g_L := R\omega_{RL} - R\omega_{FL}\left(1 - \frac{1}{2}\left(\frac{\theta_V}{K}\right)^2\right)$$

$$g_R := R\omega_{RR} - R\omega_{FR}\left(1 - \frac{1}{2}\left(\frac{\theta_V}{K}\right)^2\right)$$

31

$g_L >$ THR
ou
$g_R >$ THR ?     32

N

O

34

$\tau$

$C_{el} := 0,9 \times C_{el}$     33

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 7077484 B
- US 2006055240 A